# EUROPEAN PATENT APPLICATION

(11) **EP 2 784 611 A2**
(43) Date of publication of application: **01.10.2014**
(21) Application number: 13184553.9
(22) Date of filing: 16.09.2013
(51) Int. Cl.: G05B 15/02

(54) **ELECTRICAL EQUIPMENT CONTROL APPARATUS AND ELECTRICAL EQUIPMENT CONTROL SYSTEM**

(30) Priority: 25.03.2013 JP 2013062369; 25.03.2013 JP 2013062696
(71) Applicant: Toshiba Lighting & Technology Corporation, Yokosuka-shi, Kanagawa 237-8510 (JP)
(72) Inventor: Noguchi, Yoko, Kanagawa, 237-8510 (JP); Hoshino, Yuka, Kanagawa, 237-8510 (JP); Ide, Nagisa, Kanagawa, 237-8510 (JP)
(74) Representative: Bokinge, Ole

(57) **Abstract**

An electrical equipment control apparatus (10; 80) includes an information reception unit (121; 82), a statistical processing unit (122; 82), and a recommended pattern generation unit (123; 82). The information reception unit (121; 82) is configured to receive information regarding usages of electrical equipment. The statistical processing unit (122; 82) is configured to perform a statistical process on the information received by the information reception unit. The recommended pattern generation unit (123; 82) is configured to generate a recommended pattern regarding a use of the electrical equipment on the basis of a process result by the statistical processing unit.

## Description

### FIELD

Embodiments described herein relate generally to an electrical equipment control apparatus and an electrical equipment control system.

### BACKGROUND

In the related art, there is a system which manages and controls a plurality of lighting apparatuses in an integrated manner. For example, there is a system in which lighting apparatuses in an ordinary house are connected to a management apparatus via a network, and turning-on, turning-off, and dimming of each of the lighting apparatuses can be controlled from the management apparatus.

In addition, there is a system in which a management apparatus is connected to a server outside a house via a network, and a control instruction for a lighting apparatus can be transmitted from the server to the management apparatus. In this case, a user accesses the server from the outside of the house by using a terminal apparatus, so as to transmit a control instruction to the server, thereby controlling the lighting apparatus of the house from the outside of the house. Not only the lighting apparatus but also electrical equipment of the house such as an air conditioner or a water heater can be controlled in this way.

In addition, there is a system in which information regarding usages of electrical equipment of a house such as a lighting apparatus is transmitted to a server outside the house via a management apparatus and is used to save power consumption.

### BRIEF DESCRIPTION OF THE DRAWINGS

FIG. 1 is a diagram illustrating a configuration of an electrical equipment control system according to a first embodiment;
FIG. 2 is a diagram illustrating an aspect in which an example of statistical information generated in the electrical equipment control system according to the first embodiment is transmitted and is displayed on a terminal apparatus;
FIG. 3 is a diagram illustrating an aspect in which another example of statistical information generated in the electrical equipment control system according to the first embodiment is transmitted and is displayed on the terminal apparatus;
FIG. 4 is a diagram illustrating an aspect in which an example of a recommended pattern generated in the electrical equipment control system according to the first embodiment is transmitted and is displayed on the terminal apparatus;
FIG. 5 is a diagram illustrating an example of a configuration of a server included in the electrical equipment control system according to the first embodiment;
FIG. 6 is a diagram illustrating an example of information stored in a user information storage unit;
FIG. 7 is a diagram illustrating an example of information stored in a history storage unit;
FIG. 8 is a diagram illustrating an example of information stored in a statistical information storage unit;
FIG. 9 is a diagram illustrating an example of information stored in a recommended pattern storage unit;
FIG. 10 is a diagram illustrating an example of a configuration of a control apparatus included in the electrical equipment control system according to the first embodiment;
FIG. 11 is a diagram illustrating an example of a configuration of a terminal apparatus included in the electrical equipment control system according to the first embodiment;
FIG. 12 is a diagram illustrating an example of information stored in an identification information storage unit;
FIG. 13 is a flowchart illustrating an example of a flow of a recommended pattern generation process;
FIG. 14 is a flowchart illustrating an example of a flow of a recommended pattern presentation, selection and revision process;
FIG. 15 is a diagram illustrating an example of a configuration of a terminal apparatus included in an electrical equipment control system according to a second embodiment;
FIG. 16 is a flowchart illustrating an example of a flow of a lighting apparatus control process according to the second embodiment;
FIG. 17 is a block diagram illustrating an electrical equipment control system according to a third embodiment;
FIG. 18 is an explanatory diagram illustrating an example of a form of using the electrical equipment control system in the third embodiment;
FIG. 19 is a table illustrating an example of control information stored in a control information storage unit;
FIG. 20 is a block diagram illustrating a fourth embodiment;
FIG. 21A is an explanatory diagram illustrating information stored in an uncontrolled information storage unit; and
FIG. 21B is another explanatory diagram illustrating information stored in the uncontrolled information storage unit.

### DETAILED DESCRIPTION

An electrical equipment control apparatus according to an embodiment includes an information reception unit configured to receive information regarding usages of electrical equipment; a statistical processing unit configured to perform a statistical process on the information received by the information reception unit; and a recommended pattern generation unit configured to generate a recommended pattern regarding a use of the electrical equipment on the basis of a process result by the statistical processing unit.

In addition, the apparatus according to the embodiment may further include a recommended pattern presentation unit configured to present the recommended pattern generated by the recommended pattern generation unit to a user who uses the electrical equipment.

Further, the recommended pattern presentation unit included in the apparatus according to the embodiment may present a plurality of recommended patterns, and the apparatus may further include a pattern reception unit configured to receive a selection of a recommended pattern by the user.

In addition, the pattern reception unit included in the apparatus according to the embodiment may further receive a revision of a recommended pattern by the user.

Further, the apparatus according to the embodiment may further include a recommended pattern execution unit configured to control the electrical equipment on the basis of the recommended pattern generated by the recommended pattern generation unit.

In addition, the recommended pattern execution unit included in the apparatus according to the embodiment may automatically perform control based on the recommended pattern generated by the recommended pattern generation unit when the electrical equipment is turned on.

Further, the recommended pattern execution unit included in the apparatus according to the embodiment may continuously perform control based on a recommended pattern which is revised in response to a revision instruction when the revision instruction of the recommended pattern is received after the control based on the recommended pattern starts.

In addition, the apparatus according to the embodiment may further include a user information storage unit that stores user identification information pieces for respectively identifying a plurality of users and one or more electrical equipment pieces used by respective users specified by the plurality of user identification information pieces in correlation with each other. The information reception unit may receive information regarding usages of the one or more electrical equipment pieces used by the plurality of users, and the statistical processing unit may perform a statistical process on the usages of the one or more electrical equipment pieces used by the plurality of users. The recommended pattern generation unit may generate a recommended pattern for each of the plurality of users.

Further, in the apparatus according to the embodiment, at least one of the electrical equipment pieces may be a lighting apparatus, and the recommended pattern generation unit may generate a pattern in which a dimming ratio and color temperature of light emitted by the lighting apparatus are set, as the recommended pattern.

An electrical equipment control system according to another embodiment includes a plurality of electrical equipment pieces; the above-described electrical equipment control apparatus; and a terminal apparatus that transmits an instruction for controlling the one or more electrical equipment pieces.

Hereinafter, an electrical equipment control apparatus and an electrical equipment control system according to exemplary embodiments will be described in detail with reference to the drawings. In the embodiments, constituent elements having the same function are given the same reference numeral, and repeated description will be omitted.

### First Embodiment

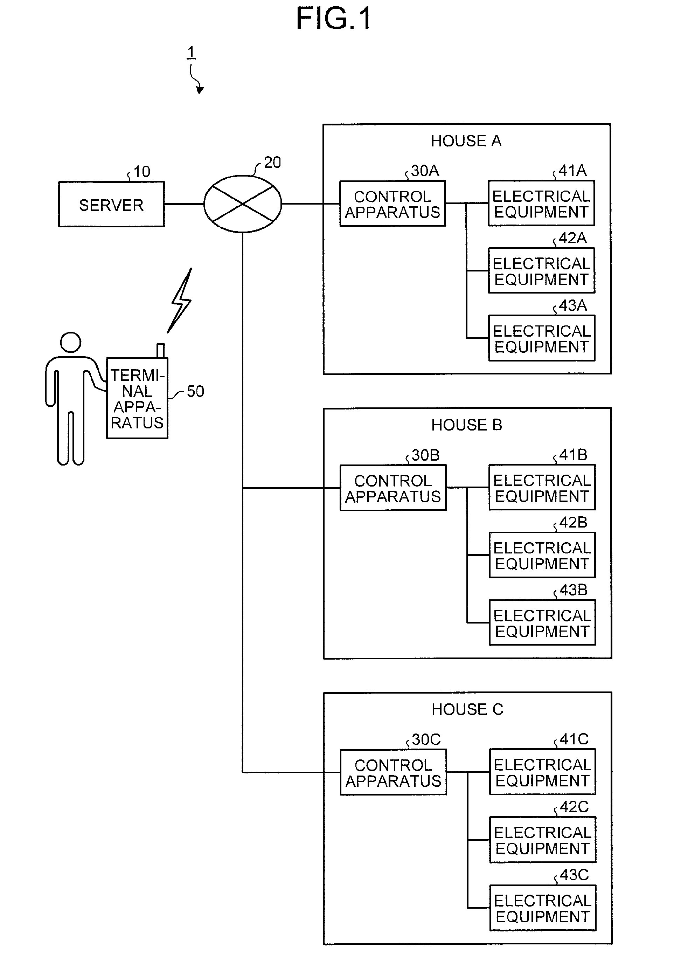

FIG. 1 is a diagram illustrating an example of a configuration of an electrical equipment control system 1 according to a first embodiment. With reference to FIG. 1, an example of the electrical equipment control system 1 according to the first embodiment will be described.

### Example of Configuration of Electrical Equipment Control System 1

The electrical equipment control system 1 includes a server 10, a control apparatus 30A connected to the server 10 via a network 20, electrical equipment 41A, 42A and 43A controlled by the control apparatus 30A, and a terminal apparatus 50. The control apparatus 30A and the electrical equipment 41A, 42A and 43A are disposed in a house A which is an ordinary house.

In addition, the server 10 is connected to a control apparatus 30B, and electrical equipment 41B, 42B and 43B controlled by the control apparatus 30B, via the network 20. The control apparatus 30B and the electrical equipment 41B, 42B and 43B are disposed in a house B which is an ordinary house.

Further, the server 10 is connected to a control apparatus 30C, and electrical equipment 41C, 42C and 43C controlled by the control apparatus 30C, via the network 20. The control apparatus 30C and the electrical equipment 41C, 42C and 43C are disposed in a house C which is an ordinary house.

In addition, in a case where the control apparatuses 30A, 30B and 30C are not required to be differentiated from each other, the control apparatuses 30A, 30B and 30C are hereinafter referred to as a control apparatus 30. FIG. 1 shows three control apparatuses which are connected to the server 10 via the network 20. However, an embodiment is not limited thereto, and the number of control apparatuses connected to the server 10 via the network 20 may be four or more.

Further, FIG. 1 shows that three pieces of electrical equipment are disposed in each house but an embodiment is not limited thereto, and any number of pieces of electrical equipment may be disposed in each house.

The server 10 is a management server which performs a process of a home energy management system (HEMS). In other words, the server 10 is a server which receives information regarding usages of electrical equipment from each house using the HEMS and performs management.

The network 20 is, for example, the Internet or the like. The network 20 is not particularly limited as long as the network performs transmission and reception of information between the respective houses A, B and C and the server 10, and a terminal apparatus can access the network. For example, any network such as a local area network (LAN) or a wide area network (WAN) may be used as the network 20.

The control apparatuses 30A, 30B and 30C are apparatuses which control electrical equipment of the respective houses A, B and C and collect information of the electrical equipment. For example, hubs which are disposed in respective houses for a process of the HEMS correspond to the control apparatuses 30A, 30B and 30C. The control apparatuses 30A, 30B and 30C may have a control function which is independent from the server 10. In addition, the control apparatuses 30A, 30B and 30C may not have an autonomous function, and may just receive an instruction signal from the server 10 and relay the signal to the electrical equipment.

The electrical equipment pieces 41A to 41C, 42A to 42C, and 43A to 43C are electrical products disposed in ordinary houses. For example, an air conditioner, a water heater, a lighting apparatus, an intercommunication phone, and the like correspond to the electrical equipment pieces 41A to 41C, 42A to 42C, and 43A to 43C. In addition, hereinafter, if there is no need of particular differentiation, the electrical equipment pieces 41A, 41B and 41C are collectively referred to electrical equipment 41. Further, the electrical equipment pieces 42A, 42B and 42C are collectively referred to electrical equipment 42. Furthermore, the electrical equipment pieces 43A, 43B and 43C are collectively referred to electrical equipment 43.

Information regarding usages of the electrical equipment pieces 41A, 42A, 43A, 41B, 42B, 43B, 41C, 42C and 43C is sequentially or periodically transmitted to the control apparatuses 30A, 30B and 30C. In addition, the information is further transmitted to the server 10 from the control apparatuses 30A, 30B and 30C via the network 20.

The terminal apparatus 50 is, for example, a portable phone, a smart phone, a personal digital assistant (PDA), a tablet terminal, or the like. The terminal apparatus 50 is not particularly limited as long as the terminal apparatus has a communication function using a wireless type, Wi-Fi type, or the like, and can access the server 10 via the network 20. In addition, if the terminal apparatus 50 is used only in a house, the terminal apparatus may not have a function of accessing the network 20 and may have only a communication function with the control apparatuses 30A, 30B and 30C. A user operates the terminal apparatus 50 so as to control each electrical equipment piece.

### Generation of Statistical Information by Server 10

The server 10 receives information regarding usages of the electrical equipment disposed in the houses A, B and C which are ordinary houses via the network 20 and the control apparatuses 30A, 30B and 30C. For example, the server 10 receives information of a point of time when the electrical equipment 41A which is an air conditioner is turned on, a duration of the turned-on state, and the like. Further, the server 10 receives information regarding a point of time when the electrical equipment 41B which is a lighting apparatus is turned on or a point of time when the electrical equipment is turned off. Furthermore, the server 10 receives information regarding a dimming ratio of the electrical equipment 41B which is a lighting apparatus, or information regarding color temperature.

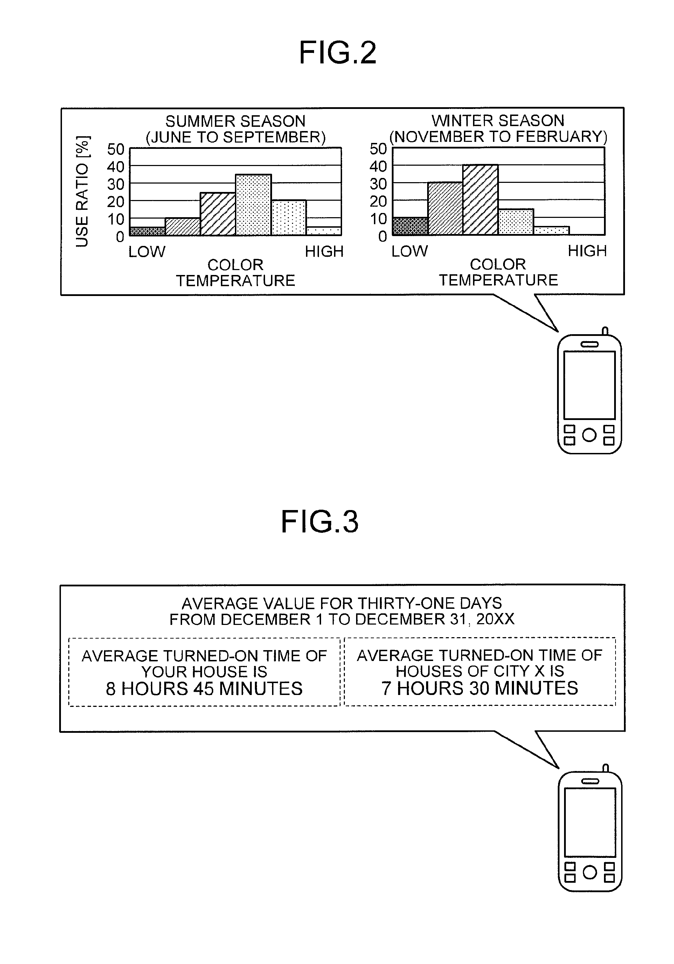

The server 10 performs a statistical process on the received information so as to generate statistical information. FIG. 2 is a diagram illustrating an aspect in which an example of statistical information generated in the electrical equipment control system 1 according to the first embodiment is transmitted and is displayed on the terminal apparatus 50. In addition, FIG. 3 is a diagram illustrating an aspect in which another example of statistical information generated in the electrical equipment control system 1 according to the first embodiment is transmitted and is displayed on the terminal apparatus 50.

As shown in FIG. 2, the server 10 generates statistical information regarding a use ratio (%) for the summer season (June to September) and color temperature when used, for example, in relation to the electrical equipment 42A which is a lighting apparatus in the house A. As shown in FIG. 2, in the electrical equipment 42A, a use ratio at approximately intermediate color temperature is the highest, and a use ratio at high color temperature or low color temperature is low. In addition, in the winter season (November to February), a use ratio at low color temperature is high, and a use ratio at high color temperature is low. As above, the server 10 receives information regarding usages of the electrical equipment 42A and performs a statistical process thereon, thereby calculating statistical information indicating a use tendency of the electrical equipment 42A of a user in the house A.

In addition, the server 10 collectively performs statistical process on information pieces received from the houses A, B and C, so as to calculate statistical information indicating use tendencies of all the electrical equipment pieces which are management targets. For example, as shown in FIG. 3, the server 10 calculates an average turned-on time in the house A from information regarding usages of the lighting apparatus of the house A. Further, the server 10 calculates an average turned-on time of the lighting apparatuses of all the houses A, B and C from information regarding usages of the lighting apparatuses of the houses A, B and C. In FIG. 1, although only the three houses A, B and C transmit information regarding usages of the electrical equipment to the server 10, if the server 10 is configured to receive information from all ordinary houses in a single city, an average turned-on time of lighting apparatuses of the entire single city can be calculated.

In this way, the server 10 calculates an average turned-on time "8 hours 45 minutes" of a lighting apparatus of a single house, for example, as shown in FIG. 3. In addition, as shown in FIG. 3, the server 10 calculates an average turned-on time "7 hours 30 minutes" of lighting apparatuses in the entire single city.

### Generation of Recommended Pattern by Server 10

Further, the server 10 creates a recommended pattern indicating a use pattern of electrical equipment which is recommended to a user of each house, on the basis of the statistical information indicating a use tendency of electrical equipment of each house, obtained through the statistical process.

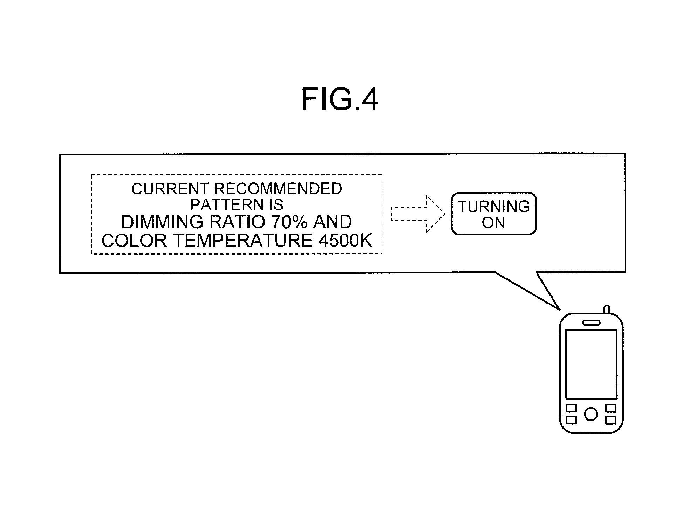

FIG. 4 is a diagram illustrating an aspect in which an example of a recommended pattern generated in the electrical equipment control system 1 according to the first embodiment is transmitted to and is displayed on the terminal apparatus. In the example shown in FIG. 4, the server 10 generates a pattern for designating a dimming ratio and color temperature of a lighting apparatus as a recommended pattern. In other words, the server 10 generates "dimming ratio 70% and color temperature 4500 K" as a recommended pattern.

There may be various aspects for generating a recommended pattern based on statistical information. For example, data may be collected so as to take statistics for each house, for each user, for each area, or for each city. In addition, statistics may be taken for each time zone, for each day, for each week, for each month, or for each season. For example, an average value of turned-on durations of a lighting apparatus of each house may be calculated for each season. Further, a dimming ratio of a lighting apparatus which is most frequently used by a user in each house may be calculated. Furthermore, an average value of turned-on durations of lighting apparatuses of the entire city may be calculated. In this case, for example, an average value of Monday, an average value of January, and the like may be calculated.

The server 10 employs, for example, data with the highest frequency of use as a recommended pattern from the statistical information obtained in this way. For example, if frequency at which a user uses a lighting apparatus at a dimming ratio 70% and color temperature 5000 K is the highest, a recommended pattern is the dimming ratio 70% and color temperature 5000 K.

In addition, the server 10 may employ an average value obtained through a statistical process as a recommended pattern. For example, if an average value of turned-on time of lighting apparatuses obtained for a certain entire city is 6 hours, and a turned-on time for a predetermined user is 8 hours, the turned-on time 6 hours is generated as a recommended pattern.

Further, the server 10 may employ, for example, data with the highest energy efficiency obtained through a statistical process as a recommended pattern.

Data which is referred to by the server 10 as statistical information may be only data of a user who is a target for generating a recommended pattern, or may be data of the entire area or the entire city. In addition, statistics based on only data for users satisfying a predetermined condition may be taken, and may be employed as statistical information. Further, an average value or a value having high frequency of use obtained from statistical information for users other than a user who is a presentation destination of a recommended pattern may be used as a recommended pattern for the corresponding user. Furthermore, for example, statistics may be taken by extracting users having a predetermined family structure. Moreover, statistics only for electrical equipment disposed in a room with predetermined kind and size, for example, a living room may be taken. In addition, statistics may be taken by extracting only users who use a similar kind of electrical equipment or whose family structure is similar.

As above, the server 10 changes information used as statistical information depending on a purpose of creating a recommended pattern or a use application of a recommended pattern. In addition, the server 10 generates in advance a plurality of statistical information pieces calculated through various settings so as to immediately present statistical information when requested from a user. Further, the user calls statistical information as necessary, and can understand, for example, a power consumption tendency of the user.

In addition, a numerical value employed as a recommended pattern may be a high value or an average value of frequency of use obtained as statistical information. Further, a numerical value may be a maximum value, a minimum value, a median, or a mode. Furthermore, the kind of numerical value employed as a recommended pattern may be set to be changed depending on the kind of control target, that is, electrical equipment which is used as a control target, or a control moment, that is, season or time. For example, various settings are possible such as employing a median in fall and a mode in spring.

### Example of Configuration of Server 10

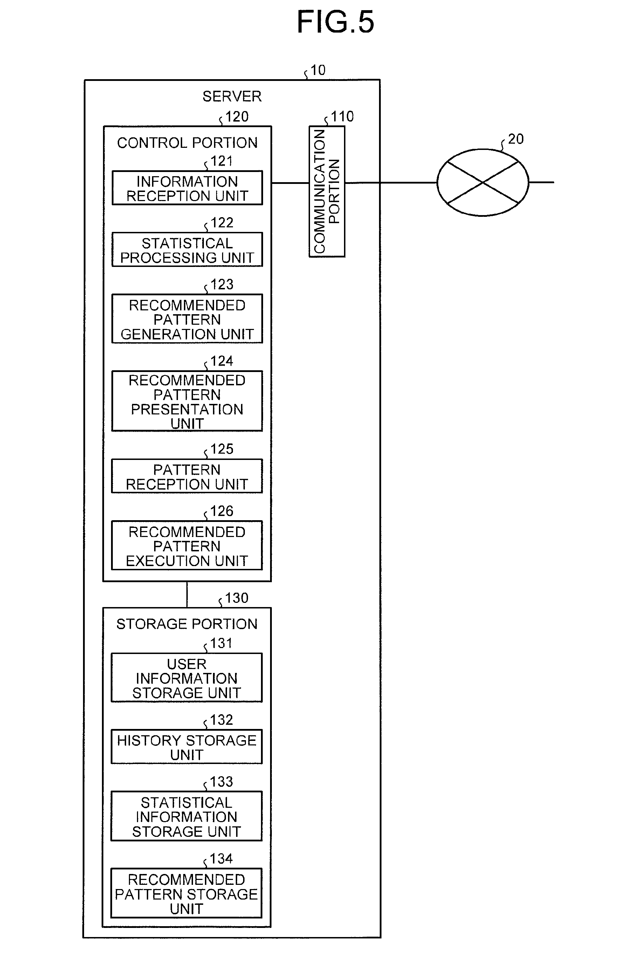

Next, with reference to FIG. 5, an example of a configuration of the server 10 will be described more in detail.

FIG. 5 is a diagram illustrating an example of a configuration of the server 10 included in the electrical equipment control system 1 according to the first embodiment.

As shown in FIG. 5, the server 10 includes a communication portion 110, a control portion 120, and a storage portion 130. The communication portion 110 realizes communication between the server 10 and other apparatuses. The control portion 120 controls generation of information in the server 10, transmission and reception of generated information, or the like. The storage portion 130 stores information used for a process in the server 10, information generated in the server 10, and the like.

The control portion 120 includes an information reception unit 121, a statistical processing unit 122, a recommended pattern generation unit 123, a recommended pattern presentation unit 124, a pattern reception unit 125, and a recommended pattern execution unit 126.

The information reception unit 121 receives information regarding usages of electrical equipment pieces of respective houses from the control apparatuses 30A, 30B and 30C via the network 20. The information received by the information reception unit 121 is stored in a history storage unit 132 (described later).

The statistical processing unit 122 performs a statistical process on the information received by the information reception unit 121. For example, the statistical processing unit 122 calculates an average turned-on time on the basis of information regarding a turned-on time of a lighting apparatus of each house, received by the information reception unit 121. The statistical information generated by the statistical processing unit 122 is stored in a statistical information storage unit 133 (described later).

The recommended pattern generation unit 123 generates a recommended pattern which is presented to each house on the basis of the statistical information generated by the statistical processing unit 122. The recommended pattern generated by the recommended pattern generation unit 123 is stored in a recommended pattern storage unit 134 (described later).

The recommended pattern presentation unit 124 presents a recommended pattern corresponding to a user who transmits a request to the user in a case or the like where the request is received from the user via the terminal apparatus 50. Specifically, the recommended pattern presentation unit 124 transmits a recommended pattern with a format which can be displayed on a display portion of the terminal apparatus 50 which transmits a request, to the terminal apparatus 50.

When a pattern setting request is received from the terminal apparatus 50, the pattern reception unit 125 stores a pattern specified by the pattern setting request in the storage portion 130 as a recommended pattern. For example, if a user selects one of a plurality of recommended patterns, revises a presented recommended pattern, or inputs a new pattern for himself or herself, a pattern setting request is transmitted to the pattern reception unit 125.

The recommended pattern execution unit 126 controls electrical equipment on the basis of the recommended pattern generated by the recommended pattern generation unit 123 or the recommended pattern which is received by the pattern reception unit 125 and is stored in the storage portion 130.

### Information Stored in Storage Portion 130

Next, with further reference to FIG. 5, information stored in the storage portion 130 will be described. The storage portion 130 includes a user information storage unit 131, the history storage unit 132, the statistical information storage unit 133, and the recommended pattern storage unit 134.

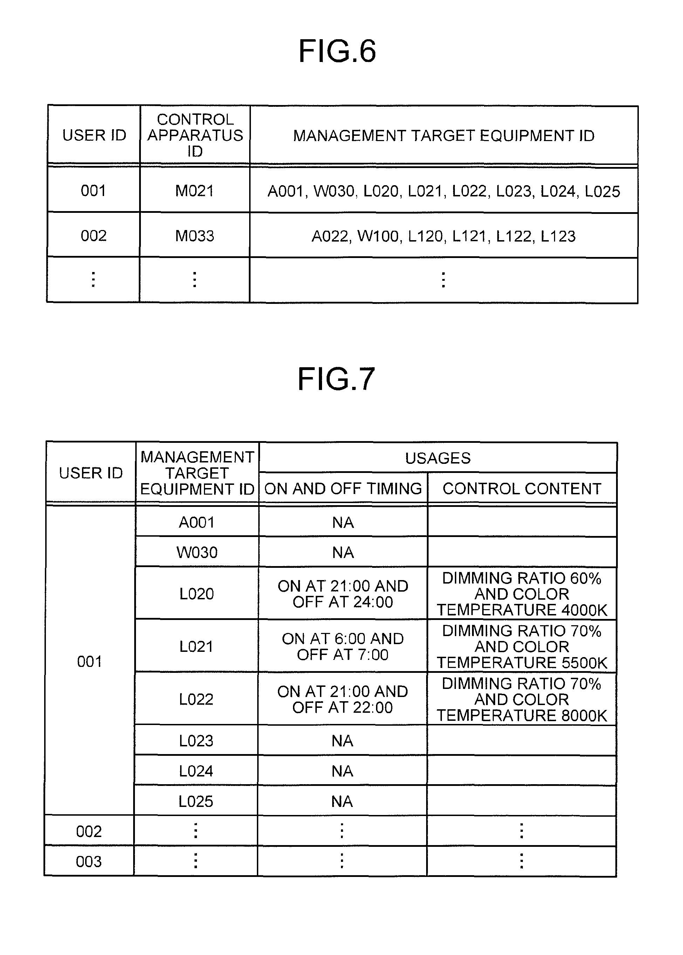

The user information storage unit 131 stores information of a user who manages information of electrical equipment of a house by using the server 10. FIG. 6 is a diagram illustrating an example of information stored in the user information storage unit 131.

As shown in FIG. 6, the user information storage unit 131 stores a user identifier (ID) for uniquely specifying a user and a control apparatus ID for uniquely specifying a control apparatus. In addition, the user information storage unit 131 stores a management target equipment ID for uniquely specifying electrical equipment which is a management target of a control apparatus in correlation with each control apparatus ID. For example, in the example of FIG. 6, the user ID "001" and the control apparatus ID "M021" are stored in correlation with each other. The information indicates that a user of the user ID "001" controls electrical equipment by using a control apparatus of the control apparatus ID "M021". Further, management target equipment IDs "A001, WO30, L020, L021, L022, L023, L024 and L025" are stored in correlation with the control apparatus ID "M021". The information indicates that electrical equipment pieces of the management target equipment IDs "A001, WO30, L020, L021, L022, L023, L024 and L025" are managed and are controlled by the control apparatus of the control apparatus ID "M021". Information of a user using the server 10 is stored in the user information storage unit 131.

The history storage unit 132 stores history of usages of each piece of electrical equipment. FIG. 7 is a diagram illustrating an example of information stored in the history storage unit 132.

As shown in FIG. 7, the history storage unit 132 stores history of usages of each piece of electrical equipment in correlation with a user ID and a management target equipment ID. For example, in the example of FIG. 7, information "On at 21 o'clock and Off at 24 o'clock" is stored as "On and Off timing" in correlation with the user ID "001" and the management target equipment ID "L020". The information indicates that electrical equipment specified by the management target equipment ID "L020" is turned on at 21 o'clock and is turned off at 24 o'clock. Further, in addition to this information, information of a date or the like is also stored. In addition, information "dimming ratio 60% and color temperature 4000 K" is stored as "control content". The information indicates that, when the electrical equipment of the management target equipment ID "L020" is turned on, a dimming ratio is 60%, and color temperature is 4000 K. As above, when each piece of electrical equipment is used, the history storage unit 132 stores usages thereof as history.

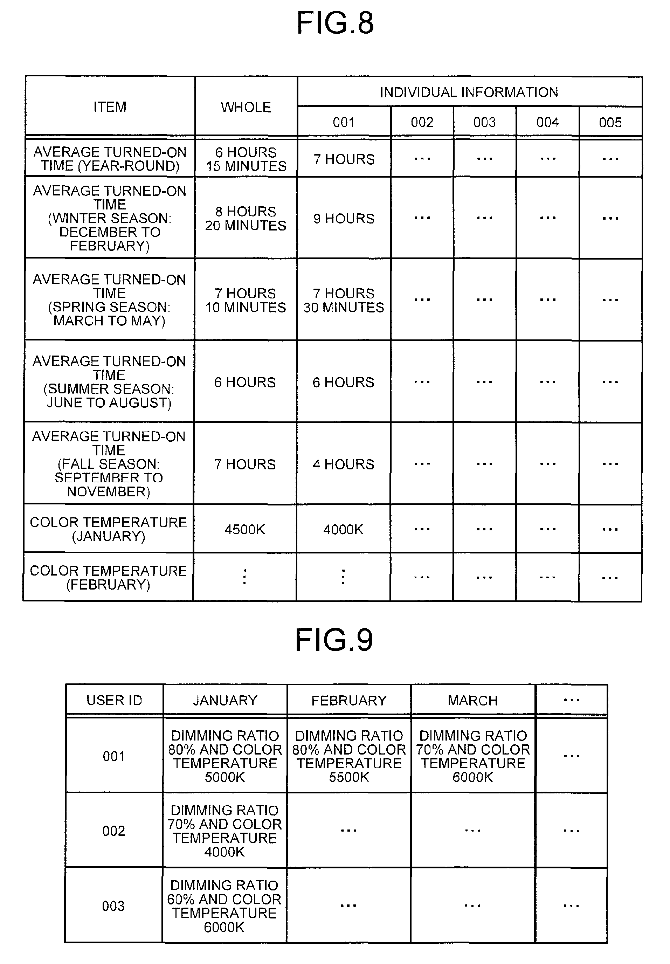

The statistical information storage unit 133 stores statistical information generated through a process by the statistical processing unit 122. FIG. 8 is a diagram illustrating an example of information stored in the statistical information storage unit 133.

As shown in FIG. 8, the statistical information storage unit 133 stores statistical information obtained by averaging all electrical equipment pieces which are management targets of the server 10, as a "whole" in correlation with an "item". For example, in the example of FIG. 8, a year-round average turned-on time "6 hours 15 minutes" of all corresponding electrical equipment pieces is stored in correlation with the item "average turned-on time (year-round)". In addition, a year-round average turned-on time "7 hours" of electrical equipment used by the user of the user ID "001" is stored as "individual information". Similarly, an "average turned-on time (winter season: December to February)", an "average turned-on time (spring season: March to May)", an "average turned-on time (summer season: June to August)", and an "average turned-on time (fall season: September to November)" are stored. Further, an average value "4500 K" in January of color temperature when all corresponding electrical equipment pieces are turned on is stored as the item "color temperature (January)". In addition, the "item" may be appropriately set by a manager of the server 10 or may be a default setting. Further, an average value or the like for each time zone, for each day, for each day of the week, for each week, for each month, for each season, and the like may be set as the "item".

The recommended pattern storage unit 134 stores a recommended pattern which is generated as a result of a process by the recommended pattern generation unit 123. FIG. 9 is a diagram illustrating an example of information stored in the recommended pattern storage unit 134.

As shown in FIG. 9, the recommended pattern storage unit 134 stores a recommended pattern of each month such as, for example, "January", "February", and "March" in correlation with the "user ID". In the example of FIG. 9, a recommended pattern "dimming ratio 80% and color temperature 5000 K" of January is stored in correlation with the user ID "001". The information indicates that a dimming ratio of 80% and color temperature of 5000 K are recommended in January for electrical equipment (lighting apparatus) of the user specified by the user ID "001". In addition, although a recommended pattern is set for each user ID in the example of FIG. 9, a recommended pattern may be set in correlation with a user ID and an electrical equipment ID, or other settings such as each day or each day of the week may be employed.

### Example of Configuration of Control Apparatus 30

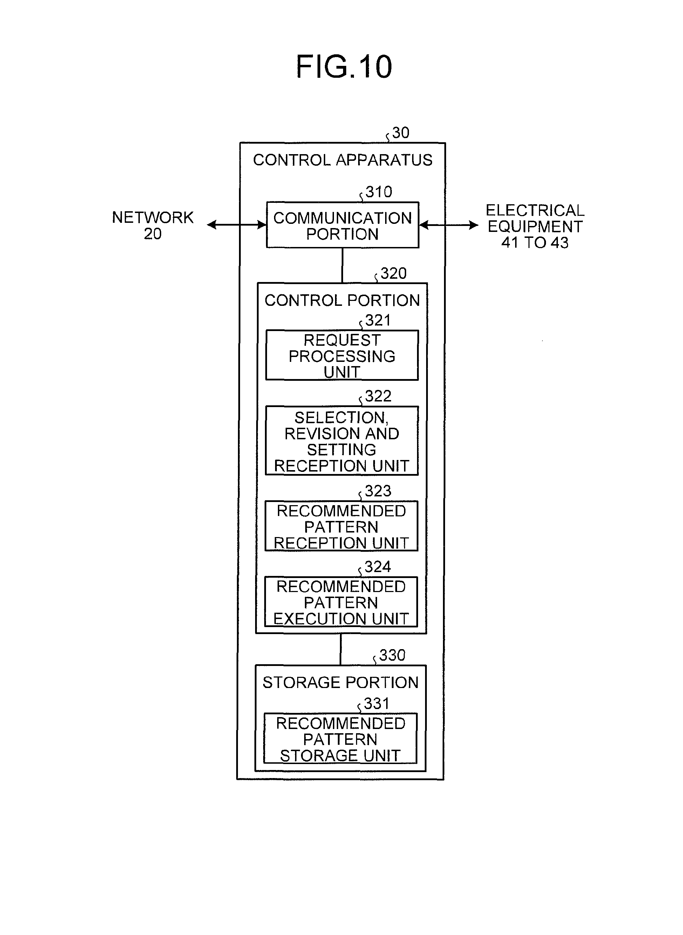

Next, with reference to FIG. 10, an example of a configuration of the control apparatus 30 will be described. FIG. 10 is a diagram illustrating an example of a configuration of the control apparatus 30 included in the electrical equipment control system 1 according to the first embodiment.

As shown in FIG. 10, the control apparatus 30 includes a communication portion 310, a control portion 320, and a storage portion 330. The communication portion 310 is connected to the network 20 so as to realize communication with the server 10. In addition, the communication portion 310 is connected to a home network such as Echonet Lite so as to realize communication with the electrical equipment 41 to 43, and the like.

The control portion 320 controls a process in the control apparatus 30. The control portion 320 includes a request processing unit 321, a selection, revision and setting reception unit 322, a recommended pattern reception unit 323, and a recommended pattern execution unit 324.

The request processing unit 321 receives a request of a user which is input from the terminal apparatus 50. In addition, the request processing unit 321 performs a process according to the request. For example, if the request input by the user is a statistical information request, the request processing unit 321 transmits the statistical information request to the server 10, and receives statistical information from the server 10 such that the statistical information is transmitted to the terminal apparatus 50. The statistical information request is to request transmission of statistical information generated in the server 10. Further, if the request input by the user is a recommended pattern display request, the request processing unit 321 determines whether or not a recommended pattern corresponding to the recommended pattern display request is stored in the control apparatus 30. If the recommended pattern is stored in the control apparatus 30, the request processing unit 321 reads the recommended pattern which is transmitted to the terminal apparatus 50. On the other hand, if the recommended pattern is not stored in the control apparatus 30, the request processing unit 321 transmits the recommended pattern display request to the server 10. Furthermore, the request processing unit 321 receives the recommended pattern from the server 10 and transmits the recommended pattern to the terminal apparatus 50.

The selection, revision and setting reception unit 322 receives selection, revision and setting of a recommended pattern in the terminal apparatus 50. For example, if the user selects a specific recommended pattern among recommended patterns displayed on the terminal apparatus 50, the selection, revision and setting reception unit 322 receives the selection. In addition, the selection, revision and setting reception unit 322 stores the selected recommended pattern (described later), and transmits information of the selected recommended pattern to the server 10.

Further, if the user revises a recommended pattern in the terminal apparatus 50, the selection, revision and setting reception unit 322 receives revised content thereof. In other words, the selection, revision and setting reception unit 322 stores the revised recommended pattern (described later), and transmits information of the revised recommended pattern to the server 10.

In addition, if the user sets a new pattern different from a recommended pattern in the terminal apparatus 50, the selection, revision and setting reception unit 322 receives the new pattern. In other words, the selection, revision and setting reception unit 322 stores the new pattern (described later), and transmits information of the new pattern to the server 10.

The recommended pattern reception unit 323 periodically receives a recommended pattern from the server 10, and updates a recommended pattern stored in a recommended pattern storage unit 331 of the storage portion 330. The recommended pattern storage unit 331 stores a recommended pattern which is valid at that time.

The recommended pattern execution unit 324 controls the electrical equipment on the basis of the recommended pattern which is valid at that time.

Although, in the example of FIG. 10, the control apparatus 30 stores a recommended pattern which is valid at that time, the present embodiment is not limited thereto, and a recommended pattern may be read from the server 10 each time a recommended pattern is applied.

If a recommended pattern is revised through a process in the selection, revision and setting reception unit 322 or a new pattern is set, a recommended pattern stored in the recommended pattern storage unit 331 is updated on all such occasions, and corresponding information is transmitted to the server 10.

### Example of Configuration of Terminal Apparatus 50

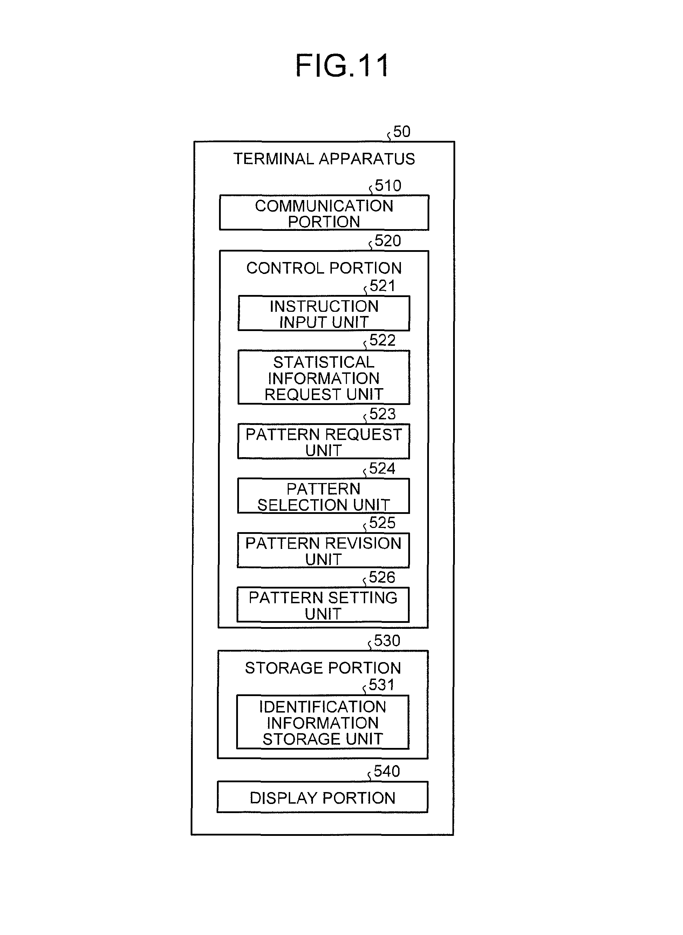

Next, with reference to FIG. 11, an example of a configuration of the terminal apparatus 50 will be described. FIG. 11 is a diagram illustrating an example of a configuration of the terminal apparatus 50 included in the electrical equipment control system 1 according to the first embodiment.

As shown in FIG. 11, the terminal apparatus 50 includes a communication portion 510, a control portion 520, a storage portion 530, and a display portion 540. The communication portion 510 realizes communication between the terminal apparatus 50, and the control apparatus 30, the electrical equipment 41 to 43, and the network 20.

The control portion 520 controls a process in the terminal apparatus 50. The control portion 520 includes an instruction input unit 521, a statistical information request unit 522, a pattern request unit 523, a pattern selection unit 524, a pattern revision unit 525, and a pattern setting unit 526.

The instruction input unit 521 receives an instruction input from a user. For example, the user selects an icon displayed on the display portion 540 of the terminal apparatus 50 so as to input an instruction. The instruction input is, for example, an input of an instruction for turning on or off electrical equipment.

The statistical information request unit 522 receives a statistical information request from the user. For example, the user selects an icon displayed on the display portion 540 of the terminal apparatus 50 so as to input an instruction for requesting transmission of statistical information. When the statistical information request is received from the user, the statistical information request unit 522 accesses the server 10 via the network 20 so as to request transmission of statistical information. In response to the request, the server 10 transmits corresponding statistical information to the terminal apparatus 50. The terminal apparatus 50 displays the received statistical information in the display portion 540.

The pattern request unit 523 receives a recommended pattern request from the user. For example, the user selects an icon displayed on the display portion 540 of the terminal apparatus 50 so as to input an instruction for requesting transmission of a recommended pattern. When the recommended pattern request from the user is received, the pattern request unit 523 accesses the control apparatus 30 or the server 10 so as to request transmission of a corresponding recommended pattern. In response to the request, the control apparatus 30 or the server 10 transmits the corresponding recommended pattern to the terminal apparatus 50. The terminal apparatus 50 displays the received recommended pattern in the display portion 540.

The pattern selection unit 524 receives a selection of a recommended pattern from the user. For example, if a plurality of recommended patterns are displayed on the display portion 540 of the terminal apparatus 50, the user selects one thereof so as to select a recommended pattern. When the selection of the recommended pattern from the user is received, the pattern selection unit 524 accesses the control apparatus 30 or the server 10 so as to transmit information of the selected recommended pattern thereto. In a case of a configuration in which the control apparatus 30 periodically downloads and stores a recommended pattern, information of a selected recommended pattern may be synchronized between the control apparatus 30 and the server 10.

When the selection of the recommended pattern is received by the pattern selection unit 524, and the information of the selected recommended pattern is stored in the server 10 and the control apparatus 30, the selected recommended pattern is thereafter applied to control.

The pattern revision unit 525 receives a revision of a recommended pattern from the user. For example, the user may revise a part of a recommended pattern displayed on the display portion 540 of the terminal apparatus 50. The revision may be realized, for example, through selection or the like from a drop-down menu. When the revision of the recommended pattern from the user is received, the pattern revision unit 525 accesses the control apparatus 30 or the server 10 so as to transmit information of the revised recommended pattern thereto. When the information of the revised recommended pattern is stored in the server 10 and the control apparatus 30, the revised recommended pattern is thereafter applied to control.

The pattern setting unit 526 receives a setting of a control pattern from the user. For example, the user inputs a desired setting to a screen displayed on the display portion 540 of the terminal apparatus 50 so as to set a control pattern. The set pattern may be partially the same as a recommended pattern or may be a pattern which is completely different therefrom. When the pattern setting unit 526 receives the setting of the control pattern, and the set control pattern is stored in the control apparatus 30 and the server 10, the set control pattern is thereafter applied to control.

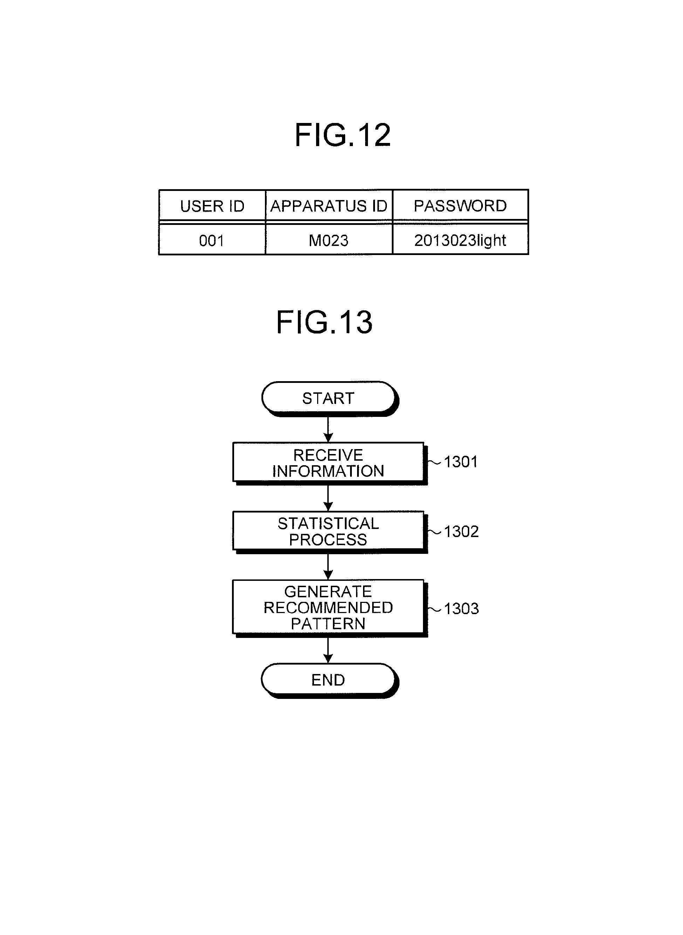

Referring to FIG. 11 again, the storage portion 530 will be described. The storage portion 530 includes an identification information storage unit 531. The identification information storage unit 531 stores information for identifying the terminal apparatus 50 and a user thereof. FIG. 12 is a diagram illustrating an example of information stored in the identification information storage unit 531.

As shown in FIG. 12, the identification information storage unit 531 stores an apparatus ID for uniquely specifying the terminal apparatus 50 in correlation with a user ID. In addition, a password for authenticating the user and the terminal apparatus 50 may be stored. In the example of FIG. 12, an apparatus ID "M023" and a password "2013023light" are stored in correlation with a user ID "001". When the terminal apparatus 50 accesses the server 10 or the control apparatus 30, an authentication process is automatically performed using this identification information.

The display portion 540 is, for example, a liquid crystal screen, and displays a recommended pattern, statistical information, and the like therein.

### Example of Flow of Recommended Pattern Generation Process in Server 10

Next, with reference to FIG. 13, a description will be made of an example of a flow of a recommended pattern generation process in the server 10. FIG. 13 is a flowchart illustrating an example of a flow of a recommended pattern generation process.

As shown in FIG. 13, the information reception unit 121 of the server 10 receives information regarding usages of each piece of electrical equipment via the control apparatus 30 (Act 1301). When the information reception unit 121 receives the information, the statistical processing unit 122 performs a statistical process on the received information (Act 1302). In addition, when statistical information is generated, a recommended pattern for each user is generated based on the generated statistical information (Act 1303). This causes the recommended pattern generation process to finish.

### Example of Flow of Recommended Pattern Presentation, Selection and Revision Process

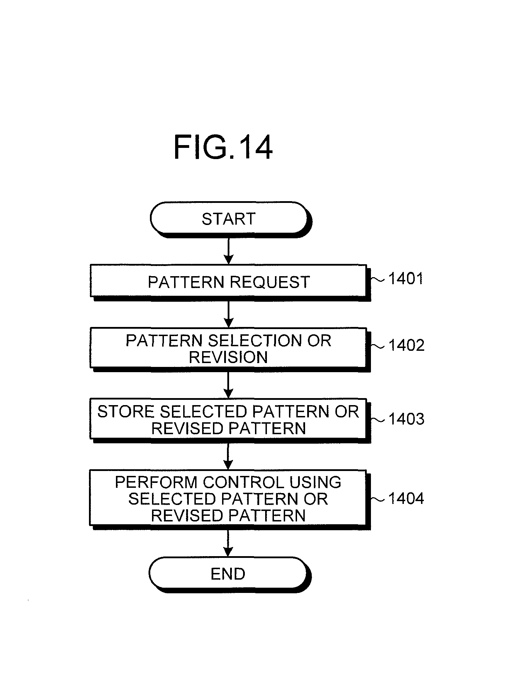

Next, with reference to FIG. 14, a recommended pattern presentation, selection and revision process will be described. FIG. 14 is a flowchart illustrating an example of a flow of a recommended pattern presentation, selection and revision process.

First, the terminal apparatus 50 receives a recommended pattern request of a user. The terminal apparatus 50 which receives the recommended pattern request transmits the recommended pattern request to the server 10 or the control apparatus 30 (Act 1401). The server 10 or the control apparatus 30 transmits a recommended pattern to the terminal apparatus 50 in response to the request. The terminal apparatus 50 which receives the recommended pattern displays the recommended pattern on the display portion 540. The user selects a desired recommended pattern or revises a recommended pattern from the display portion 540 (Act 1402). In response thereto, the pattern reception unit 125 of the server 10 or the selection, revision and setting reception unit 322 of the control apparatus 30 receives the selected recommended pattern or the revised recommended pattern so as to be stored in the storage portion thereof (Act 1403). Subsequently, the server 10 or the control apparatus 30 performs control on the basis of the selected recommended pattern or the revised recommended pattern (Act 1404). This causes the recommended pattern presentation, selection and revision process to finish.

### Effects of First Embodiment

As described above, the electrical equipment control apparatus according to the first embodiment includes an information reception unit that receives information regarding usages of electrical equipment, a statistical processing unit that performs a statistical process on the information received by the information reception unit, and a recommended pattern generation unit that generates a recommended pattern regarding a use of the electrical equipment on the basis of a process result by the statistical processing unit. For this reason, a recommended pattern suitable for a user can be created based on use history of electrical equipment by the user.

In addition, according to the electrical equipment control apparatus according to the first embodiment, a user checks presented recommended patterns, and can select a favorite recommended pattern if there are a plurality of recommended patterns. Further, the user enables control based on the selected recommended pattern to be performed, and thus can realize control of electrical equipment suitable for user's taste through a simple operation.

### Second Embodiment

In the electrical equipment control system 1 according to the first embodiment, a user can request presentation of a recommended pattern and select or revise the presented recommended pattern. In contrast, in the second embodiment, a recommended pattern is automatically applied without a user side being aware of a recommended pattern.

### Example of Configuration of Terminal Apparatus 50A According to Second Embodiment

An electrical equipment control system according to the second embodiment is the same as the electrical equipment control system 1 according to the first embodiment except that a terminal apparatus 50A is provided. For this reason, description of the common constituent element will be omitted.

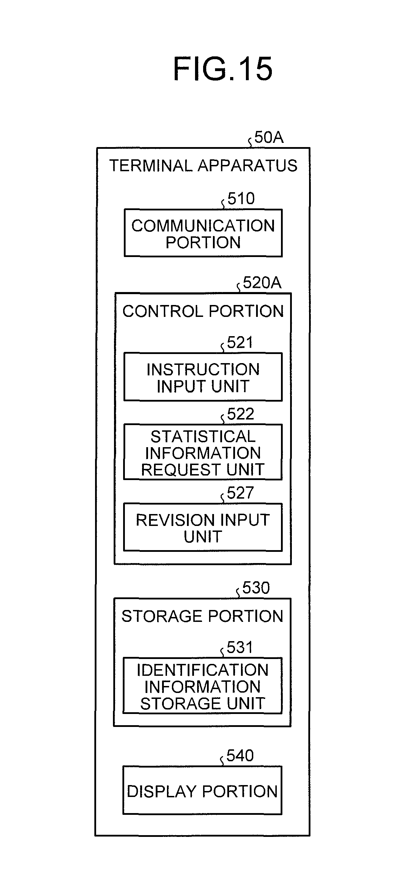

FIG. 15 is a diagram illustrating an example of a configuration of the terminal apparatus 50A included in the electrical equipment control system according to the second embodiment. As shown in FIG. 15, the terminal apparatus 50A includes a communication portion 510, a control portion 520A, and a storage portion 530. Functions of the communication portion 510 and the storage portion 530 are the same as in the first embodiment.

The control portion 520A includes an instruction input unit 521, a statistical information request unit 522, and a revision input unit 527. Functions of the instruction input unit 521 and the statistical information request unit 522 are the same as in the first embodiment. The terminal apparatus 50A of the second embodiment is different from the terminal apparatus 50 of the first embodiment in that the revision input unit 527 is provided.

In the terminal apparatus 50A of the second embodiment, if a user inputs an instruction for turning on electrical equipment from the terminal apparatus 50A, a recommended pattern is automatically applied to the electrical equipment by the server 10 or the control apparatus 30. For example, if a recommended pattern is "dimming ratio 70% and color temperature 4500 K", light with "dimming ratio 70% and color temperature 4500 K" is emitted in response to inputting of an instruction for turning-on without particularly notifying the user. For this reason, the user is not aware of whether or not a recommended pattern is particularly applied.

If the user is not satisfied with a turning-on state based on the recommended pattern, the user inputs a revision instruction from the revision input unit 527 of the terminal apparatus 50. For example, an instruction such as "dimming ratio 60% and color temperature 5000 K" is input. Then, the revision input unit 527 receives the revision instruction which is transmitted to the control apparatus 30. The selection, revision and setting reception unit 322 of the control apparatus 30 automatically stores a pattern with the revised content as a recommended pattern, and uses the stored pattern for subsequent control. The pattern reception unit 125 of the server 10 also performs a process in the same manner. In other words, the pattern reception unit 125 stores a pattern with the revised content in the recommended pattern storage unit 134 as a recommended pattern, and uses the stored pattern for subsequent control.

### Example of Flow of Lighting Apparatus Control Process According to Second Embodiment

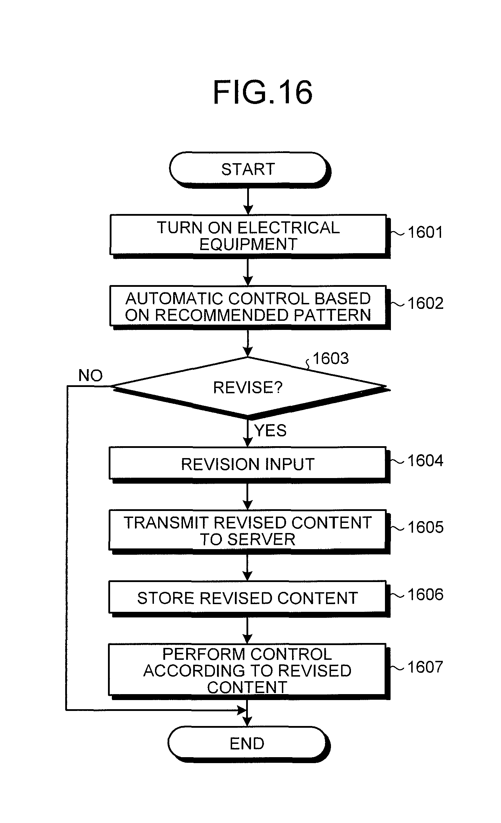

FIG. 16 is a flowchart illustrating an example of a flow of a lighting apparatus control process according to the second embodiment. With reference to FIG. 16, a further description will be made of a lighting apparatus control process in the second embodiment.

First, a user turns on electrical equipment of a house by using the terminal apparatus 50A (Act 1601). The server 10 side which detects that the electrical equipment is turned on performs automatic control on the basis of a recommended pattern (Act 1602). The terminal apparatus 50A displays a screen for asking whether or not control content is required to be changed according to the starting of the automatic control (Act 1603). If the user judges that changing is not necessary and inputs the fact (Act 1603, negative), the control based on the recommended pattern is continuously performed as it is, and the lighting apparatus control process finishes. On the other hand, if the user judges that changing is necessary (Act 1603, affirmative), the user inputs a revision instruction on the display portion 540 of the terminal apparatus 50A (Act 1604). The terminal apparatus 50A which receives the revision instruction transmits the revised content to the server 10 (Act 1605). The server 10 stores the revised content (Act 1606), and starts control based on the revised content (Act 1607). This causes the lighting apparatus control process to finish.

In addition, the revised content may be transmitted to the control apparatus 30 in Act 1605, and the control apparatus 30 notifies the server 10 thereof. Further, a notification of the revised content may be directly sent to the server 10 via the network 20 without using the control apparatus 30, and the server 10 may notify the control apparatus 30 thereof. Furthermore, in relation to the revised content stored in Act 1606, an original recommended pattern and a revised content thereof may be stored, or a previous recommended pattern may be deleted each time revision is performed.

### Effects of Second Embodiment

As above, in the second embodiment, a recommended pattern is not presented to a user side, and a recommended pattern is revised in response to an input of the user after control based on the recommended pattern starts. For this reason, the user is not aware of a recommended pattern. In addition, the user is not required to consciously select and revise a recommended pattern. For this reason, electrical equipment can be controlled by employing a recommended pattern corresponding to use history of the electrical equipment in the past by the user without increasing labor of the user. Further, the user performs a typical control process so as to update a recommended pattern without being particularly aware of a recommended pattern, and thus this can contribute to improvement in user's convenience.

### Modification Examples

In addition, the present embodiment is not construed as being limited to the above-described embodiments, but it may have any modifications. For example, in a case of controlling a television set, an air conditioner, a lighting apparatus, and the like as electrical equipment, control may be performed in a form of interlocking other electrical equipment. For example, if a tendency to reduce an illuminance of a lighting apparatus when a user watches television is obtained through a statistical process, control may be performed such that an illuminance of a lighting apparatus is reduced when a television set is turned on. Further, for example, control may be performed such that color temperature of a lighting apparatus is interlocked with setting temperature of an air conditioner. Furthermore, information regarding usages may be collected from a plurality of kinds of electrical equipment pieces and undergo a statistical process, and electrical equipment which is a control target using a recommended pattern may be only one kind thereof, for example, only a lighting apparatus.

### Third Embodiment

The first and second embodiment relate to the electrical equipment control apparatus and the electrical equipment control system which present a recommended pattern for specifying control content of electrical equipment to a user, or performs control based on a recommended pattern according to control history of the user. Next, as a third embodiment, a description will be made of an electrical equipment control apparatus and an electrical equipment control system which perform control of electrical equipment by detecting returning home of a user.

In the related art, various systems controlling electrical equipment such as a lighting apparatus are developed. For example, a lighting apparatus is commercialized in which, when a person, an object, or the like moves in a detection area, lighting is controlled using an output of an infrared human detection sensor which detects the motion. In this lighting apparatus, lighting can be turned on when a person is present, and lighting can be turned off when a person is absent, which is thus useful to reduce power consumption. As above, an output of the human detection sensor is used, so as to effectively control electrical equipment such as a lighting apparatus.

However, the human detection sensor cannot specify an individual and detects all people in a detection area of the human detection sensor. For this reason, if electrical equipment is controlled using the human detection sensor, there is a disadvantageous case. In addition, if a face authentication device or the like which specifies an individual is employed in order to control electrical equipment, an apparatus becomes complex. Further, a habit or the like of each individual is reflected on a control method of electrical equipment, and thus merely controlling electrical equipment through detection of an individual cannot be said to perform control suitable for each individual.

Therefore, in the electrical equipment control apparatus and the electrical equipment control system according to the third embodiment, electrical equipment is controlled through detection of returning home of an individual, thereby realizing control suitable for each individual.

Hereinafter, the third embodiment will be described in detail with reference to the drawings.

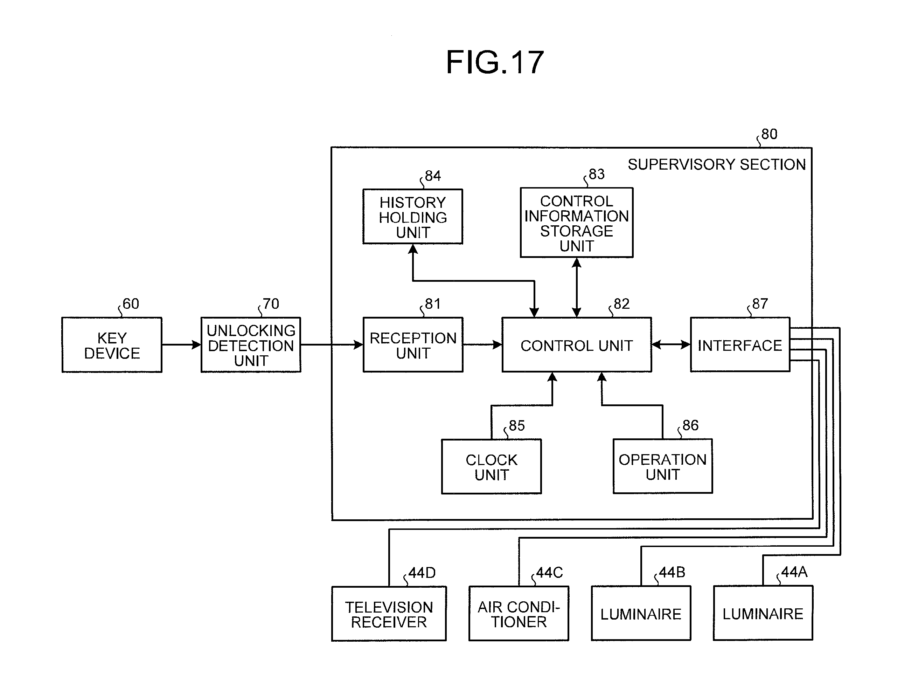

FIG. 17 is a block diagram illustrating an electrical equipment control system according to the third embodiment.

In FIG. 17, a key device 60 is formed by an electronic lock key which can electrically manage locking circumstances. For example, the key device 60 is installed at an entrance door or the like of a house. An unlocking detection unit 70 is notified of a locking state of the key device 60. The unlocking detection unit 70 can detect whether or not the key device 60 is unlocked, and can transmit a detection result to a supervisory section 80. Whether or not an inhabitant of the house returns home can be determined based on the detection result by the unlocking detection unit 70.

A reception unit 81 of the supervisory section 80 receives a detection result (unlocking detection result) by the unlocking detection unit 70 so as to be output to a control unit 82. The control unit 82 controls luminaires 44A and 44B which are lighting apparatuses, an air conditioner 44C, a television receiver 44D, and the like, according to the unlocking detection result. In addition, the control unit 82 also functions as an information reception unit, a statistical processing unit, a recommended pattern generation unit, a recommended pattern execution unit, as described later. In other words, in the third embodiment, the supervisory section 80 determines whether or not the inhabitant of the house returns home on the basis of the unlocking detection result by the unlocking detection unit 70, and controls, for example, the electrical equipment in the house if it is determined that the inhabitant of the house returns home. Accordingly, when the inhabitant of the house enters the house, turning-on of lighting, air conditioning, starting of television reception of the television receiver, or the like is automatically performed.

Information regarding a control target controlled by the supervisory section 80, control timing, a control amount, and the like is stored in a control information storage unit 83. If unlocking is shown by an unlocking detection result, the control information storage unit 83 holds information of electrical equipment which is a control target to be controlled, for example, ID information of the electrical equipment, and information regarding control timing and control content. For example, information is described in the control information stored in the control information storage unit 83, such as changing a dimming ratio of the luminaire 44A from 20% to 80%, controlling the luminaire 44B so as to be turned on, activating the air conditioner 44C, and activating the television receiver 44D, immediately after an unlocking detection result indicating unlocking is input. In addition, the control information may include information for stopping an operation of electrical equipment.

When the unlocking detection result indicating unlocking is input, the control unit 82 reads the control information stored in the control information storage unit 83 so as to generate a control signal for controlling each piece of electrical equipment, and outputs the control signal to each piece of electrical equipment via an interface 87. In other words, the control unit 82 is also operated as a recommended pattern execution unit which controls the electrical equipment on the basis of a recommended pattern.

If the control unit 82 performs only activation of the electrical equipment, or only turning-on or turning-off control of the luminaires which are electrical equipment pieces as control for the electrical equipment, an opening and closing switch of a switchboard may be used as the interface 87. In this case, the control unit 82 controls the opening and closing switch of the switchboard connected to each piece of electrical equipment, so as to control the supply of power or stopping the supply of power to each piece of electrical equipment, thereby performing activation, turning-on control, or the like of each piece of electrical equipment.

In addition, a control signal for controlling each piece of electrical equipment, for example, a control signal for dimming of a luminaire may be transmitted using the interface 87. In this case, the control unit 82 may generate a control signal for dimming control of the luminaires 44A and 44B and supplies the control signal to the luminaires 44A and 44B via the interface 87, thereby controlling dimming ratios of the luminaires 44A and 44B on the basis of an unlocking detection result indicating unlocking.

Further, in the third embodiment, the control unit 82 can set a delay time from inputting of an unlocking detection result indicating unlocking until control is performed for each piece of electrical equipment which is a control target. The control information storage unit 83 stores information of the delay time for each piece of electrical equipment which is a control target. Accordingly, for example, after the inhabitant opens the door, control can be performed such that, for example, a luminaire close to the entrance is turned on first, and a luminaire apart from the entrance is turned on later. Therefore, the electrical equipment can be automatically turned on at timing designated to the time when the inhabitant returns home, and thus convenience improves. In addition, not only a delay time until the electrical equipment is operated but also a delay time until the operated electrical equipment stops being operated may be set from the unlocking detection result.

In the third embodiment, a user can set in which order and at which timing any electrical equipment is controlled. An operation unit 86 receives a user's operation so as to output an operation signal to the control unit 82. The user can input information of a delay time of control, control content, or the like, for each piece of electrical equipment, using the operation unit 86. The control unit 82 sends information or the like of a delay time based on a user's operation to the control information storage unit 83 so as to be stored. In this way, information or the like of a delay time from inputting of an unlocking detection result indicating unlocking until control is performed is stored in the control information storage unit 83 for each piece of electrical equipment.

Further, in the third embodiment, in which order and at what timing any electrical equipment is controlled can be set according to use history of a user. For example, if the interface 87 is formed by an opening and closing switch of a switchboard, power consumption of each piece of electrical equipment is detected, and thus the control unit 82 can detect an activation or stop operation, a turning-on or turning-off operation, or the like of each piece of electrical equipment. In addition, the control unit 82 can also detect a dimming operation or the like for the luminaires 44A and 44B via the interface 87. As above, the control unit 82 also functions as an information reception unit which receives information regarding usages of electrical equipment.

Alternatively, the control system is introduced into a personal computer, a portable information terminal, or the like, and thus power-on and off timing which is desired by an inhabitant can be set.

The control unit 82 sends a detection result of this operation for each piece of electrical equipment to a history holding unit 84 so as to be stored during a predetermined trial period. In this case, the control unit 82 reads time information from a clock unit 85, and also stores information regarding a time relationship between an unlocking detection result indicating unlocking and an operation of each piece of electrical equipment. In addition, the trial period indicates a period provided before the control system is operated in order to examine operation circumstances after the inhabitant returns home, and, for example, a period of about two weeks may be set.

When the predetermined trial period elapses, the control unit 82 averages differences between a point of time of a detection result indicating unlocking and a point of time of an operation of each piece of electrical equipment and operation content by using information recorded in the history holding unit 84, and sends a delay time and operation content to the control information storage unit 83 so as to be stored for each piece of electrical equipment. When the trial period finishes, the control unit 82 thereafter controls each piece of electrical equipment on the basis of the information stored in the control information storage unit 83. As above, the control unit 82 is also operated as a statistical processing unit which performs a statistical process on information which is received as the information reception unit, and a recommended pattern generation unit which generates a recommended pattern regarding a use of the electrical equipment on the basis of a result processed as the statistical processing unit.

In addition, although, in FIG. 17, four electrical equipment pieces including the luminaires 44A and 44B, the air conditioner 44C, and the television receiver 44D are shown, the number and the kinds of controllable electrical equipment pieces are not limited thereto. In addition, although the supervisory section 80 is provided, and thus each piece of electrical equipment can be controlled individually, if common control is performed on one or more electrical equipment pieces, the supervisory section 80 may be omitted, and power or the like of each piece of electrical equipment may be directly controlled based on an unlocking detection result indicating unlocking.

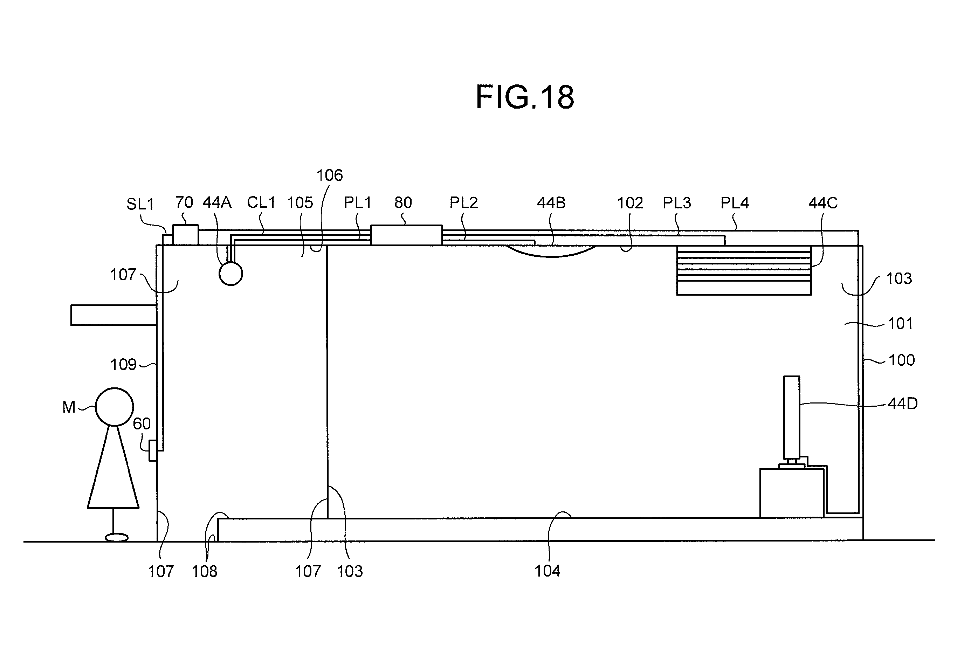

Next, an operation of the third embodiment configured in this way will be described with reference to FIG. 18. FIG. 18 is an explanatory diagram illustrating an example of a form of using the electrical equipment control system according to the third embodiment.

FIG. 18 shows various electrical equipment pieces installed in a house 100 so as to correspond to FIG. 17. The house 100 has two indoor spaces 101 and 105. The indoor space 101 is a space surrounded by a ceiling surface 102, a wall surface 103, and a floor surface 104, and the indoor space 105 is a space surrounded by a ceiling surface 106, a wall surface 107, and a floor surface 108.

The key device 60 is disposed at an entrance 109 of the house 100. The key device 60 is an electronic lock key as described above, and can notify the unlocking detection unit 70 of a locking state via a signal line SL1.

The luminaire 44A is installed on the ceiling surface 106 of the indoor space 105, and the luminaire 44B is installed on the ceiling surface 102 of the indoor space 101. In addition, the air conditioner 44C is disposed on the wall surface 103 of the indoor space 101. Further, the television receiver 44D is installed on a stand provided on the floor surface 104 in the indoor space 101.

The luminaires 44A and 44B, the air conditioner 44C, and the television receiver 44D are respectively connected to power supply lines PL1, PL2, PL3 and PL4. Power is supplied to the respective power supply lines PL1, PL2, PL3 and PL4 from a switchboard (not shown) via the interface 87 of the supervisory section 80 such that the luminaires 44A and 44B are turned on, and the air conditioner 44C and the television receiver 44D start being operated. In addition, a dimming signal is supplied to the luminaire 44A via a control line CL1 connected to the interface 87.

Further, a turning-on operation and a dimming operation of the luminaires 44A and 44B, an activation operation of the air conditioner 44C and the television receiver 44D are detected by the interface 87, and the control unit 82 is notified thereof. Accordingly, the control unit 82 can collect history of an operation of each piece of electrical equipment during the trial period. The control unit 82 may generate information regarding a delay time from inputting of an unlocking detection result indicating unlocking until each piece of electrical equipment is controlled and control content for each piece of electrical equipment on the basis of the history of an operation of each piece of electrical equipment during the trial period, so as to be stored in the control information storage unit 83.

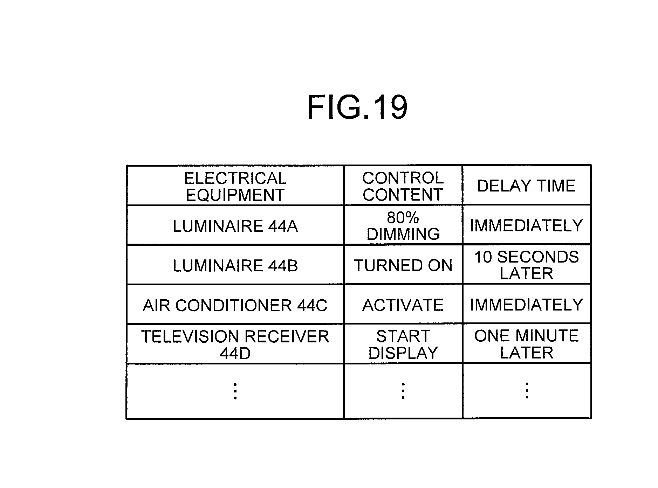

FIG. 19 is a table illustrating an example of control information stored in the control information storage unit 83. In addition, although each piece of electrical equipment is indicated by the reference numeral corresponding to FIG. 17 in FIG. 19, practically, each piece of electrical equipment is recorded using an ID unique to the equipment.

FIG. 19 shows a table which describes electrical equipment which is a control target controlled based on an unlocking detection result indicating unlocking, control content for each piece of electrical equipment, and a delay time from inputting of the unlocking detection result until control is performed. In other words, based on the unlocking detection result indicating unlocking, the luminaire 44A is immediately controlled to a dimming ratio 80%, the luminaire 44B is controlled so as to be turned on ten seconds later, the air conditioner 44C is immediately activated so as to perform air conditioning, and the television receiver 44D is activated one minute later and starts display.

Now, an inhabitant M of the house 100 is assumed to unlock the key device 60. The unlocking is detected by the unlocking detection unit 70, and an unlocking detection result indicating the unlocking is supplied to the supervisory section 80. The control unit 82 reads control information from the control information storage unit 83, and performs control by using time information from the clock unit 85. In the example of FIG. 19, the luminaire 44A is controlled to a dimming ratio 80%, and the air conditioner 44C is activated immediately after the unlocking detection result is received. A control signal from the control unit 82 is supplied to the interface 87. Therefore, power is supplied to the luminaire 44A and the air conditioner 44C by the interface 87, such that the luminaire 44A is controlled to a dimming ratio 80%, and the air conditioner 44C starts air conditioning.

Further, when ten seconds elapse from inputting of the unlocking detection result indicating the unlocking, the control unit 82 outputs a control signal for controlling the luminaire 44B so as to be turned on. Accordingly, the interface 87 starts the supply of power to the luminaire 44B, so as to turn on the luminaire 44B. Furthermore, when one minute elapses from inputting of the unlocking detection result indicating the unlocking, the control unit 82 outputs a control signal for activating the television receiver 44D. Accordingly, the interface 87 starts the supply of power to the television receiver 44D, so as to activate the television receiver 44D, thereby starting display.

As above, in the third embodiment, returning home of an inhabitant is detected using a state of the key device, and activation, turning-on, and the like of each piece of electrical equipment is controlled based on a detection result. In this case, a delay time can be set for activation or the like of each piece of electrical equipment, and control of each piece of electrical equipment after a predetermined delay time from the unlocking can start. In addition, control content of each piece of electrical equipment can be determined using history of an operation of the inhabitant during the trial period, and the inhabitant can control each piece of electrical equipment as desired after returning home.

Therefore, when the inhabitant returns home, the inhabitant is not required to individually turn on and off each piece of electrical equipment and the electrical equipment can be automatically turned on or off at timing designated to the time of returning home of the inhabitant, and thus convenience is good. In addition, power of the electrical equipment is automatically turned off so as to prevent turning-off of power from being forgotten, thereby eliminating wasteful energy. Further, since timing is determined using information obtained from a behavior pattern of the inhabitant during a specific period, optimal control of the electrical equipment can be realized. Furthermore, since the inhabitant can set turning-on and off timing of power of the electrical equipment, control which is more suitable for a taste can be performed.

For example, unlocking is performed outdoors and thus a luminaire is automatically turned on indoors. Therefore, for example, in a residence, lighting of a porch can be automatically turned on when returning home, and thus convenience increases. In addition, even a child who cannot reach a wall switch or a physically disabled user spends no time in turning on a lighting apparatus, underfoot or the like can be automatically lit, and safety improves.

In addition, although, in the third embodiment, an unlocking detection result is output to the supervisory section, and each piece of electrical equipment is controlled from the supervisory section, it is clear that the unlocking detection result may be directly sent to each piece of electrical equipment, so as to control each piece of electrical equipment.

### Fourth Embodiment

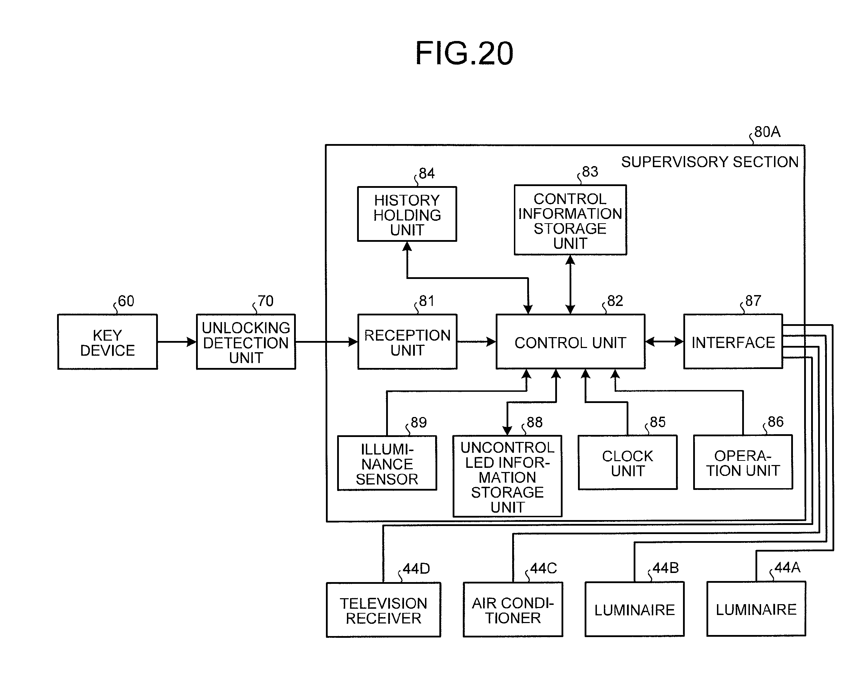

FIG. 20 is a block diagram illustrating a fourth embodiment. In FIG. 20, the same constituent element as in FIG. 17 is given the same reference numeral, and description thereof will be omitted. In the third embodiment, each piece of electrical equipment is controlled based on control information stored in the control information storage unit 83. However, for example, if an inhabitant returns home in a period when the inside of a house is bright, such as a daytime period, a luminaire is not required to be controlled so as to be turned on. Therefore, in the present embodiment, if electrical equipment is controlled in interlocking with returning home of an inhabitant, a condition (hereinafter, referred to as an uncontrolled condition) in which control is not performed or electrical equipment (hereinafter, referred to as uncontrolled target electrical equipment) excluded from a control target can be set, thereby preventing wasteful control.

A supervisory section 80A is different from the supervisory section 80 in that an uncontrolled information storage unit 88 and an illuminance sensor 89 are added. The uncontrolled information storage unit 88 describes information (hereinafter, referred to as uncontrolled information) of an uncontrolled condition and an uncontrolled target electrical equipment therein. For example, the uncontrolled information storage unit 88 stores information regarding a time zone when control is not performed, brightness at which control is not performed, uncontrolled target electrical equipment, and the like. The control unit 82 can set and update content of the uncontrolled information storage unit 88 by operating the operation unit 86 (that is, the control unit 82 can be operated as a pattern reception unit which receives a selection or a revision of a recommended pattern by a user). In addition, the control unit 82 may acquire information regarding hours of sunlight, and may automatically set a time zone when control is not performed according to a difference between hours of sunlight depending on seasons.

The illuminance sensor 89 can detect brightness of the inside of the house in which electrical equipment is disposed and can output a detection result of brightness to the control unit 82. The control unit 82 determines control content according to control information stored in the control information storage unit 83, and determines a period or electrical equipment on which control is not performed according to information stored in the uncontrolled information storage unit 88.

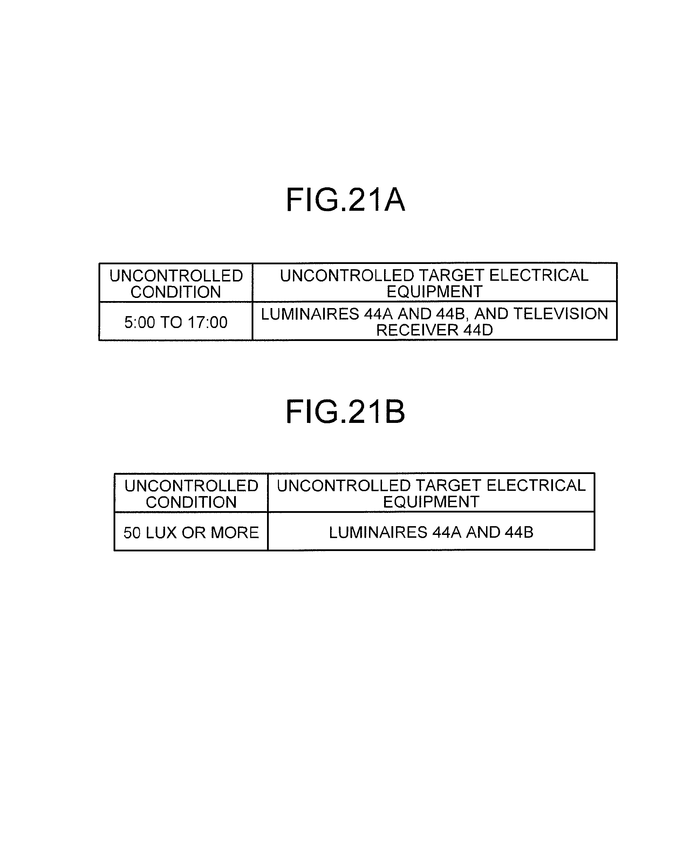

Next, an operation of the fourth embodiment configured in this way will be described with reference to FIGS. 21A and 21B. FIGS. 21A and 21B are explanatory diagrams illustrating information stored in the uncontrolled information storage unit 88. In addition, in FIGS. 21A and 21B, each piece of electrical equipment is indicated by the reference numeral corresponding to FIG. 17, but, practically, the electrical equipment is recorded using an ID or the like unique to the equipment.

FIGS. 21A and 21B show an uncontrolled condition and corresponding uncontrolled target electrical equipment. The example of FIG. 21A shows that, even if an unlocking detection result indicating unlocking occurs, turning-on or activation control is not performed on the luminaires 44A and 44B, and the television receiver 44D during a period between 5 to 17 o'clock. In addition, the example of FIG. 21B shows that, if an illuminance obtained by the illuminance sensor 89 is 50 lux or more, turning-on control is not performed on the luminaires 44A and 44B even if an unlocking detection result indicating unlocking is input.

Now, an inhabitant of a house is assumed to unlock the key device 60. The unlocking is detected by the unlocking detection unit 70, and an unlocking detection result indicating the unlocking is supplied to the supervisory section 80A. The control unit 82 reads control information from the control information storage unit 83, reads uncontrolled information from the uncontrolled information storage unit 88, and performs control by using time information from the clock unit 85 and a brightness detection result from the illuminance sensor 89.

In the example of FIG. 21A, even if the unlocking detection result indicating the unlocking is input, the control unit 82 does not perform turning-on control on the luminaires 44A and 44B and does not activate the television receiver 44D when the returning time of the inhabitant is 1:00 p.m. In addition, also in this case, for example, the air conditioner 44C can be activated based on control information.

Further, in the example of FIG. 21B, even if the unlocking detection result indicating the unlocking is input, turning-on control is not performed on the luminaires 44A and 44B when brightness of 50 lux or more is determined, and, for example, only the air conditioner 44C and the television receiver 44D are activated. Since the inside of the house may be dark in bad weather even in the daytime, lighting is turned on in this case as well according to the setting of FIG. 21B, and thus convenience is good.

As above, in the fourth embodiment, the same effects as in the third embodiment can be achieved, and an uncontrolled condition in which returning home of an inhabitant is not interlocked with control of electrical equipment and uncontrolled target electrical equipment can be set using uncontrolled information. Accordingly, for example, automatic control of electrical equipment can be performed only in the nighttime, and thus this contributes to acceleration of energy saving.

In addition, although, in the fourth embodiment, an example is described in which controllability is determined based on only one condition, it is clear that controllability may be determined using a plurality of conditions as an AND condition, an OR condition, and a NOT condition.

In addition, although, in the third and fourth embodiments, an example is described in which returning home of an inhabitant is determined based on an unlocking detection result, returning home of the inhabitant may be determined using other methods. For example, a GPS function of a portable terminal of the inhabitant may be used. The supervisory section has a function of receiving information from the portable terminal, and the portable terminal detects that a distance from the inhabitant's house is within a predetermined distance and transmits information indicating that the inhabitant comes close to the house to the supervisory section, thereby automatically controlling electrical equipment.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electrical equipment control apparatus (10; 80) comprising:
an information reception unit (121; 82) configured to receive information regarding usages of electrical equipment;
a statistical processing unit (122; 82) configured to perform a statistical process on the information received by the information reception unit; and
a recommended pattern generation unit (123; 82) configured to generate a recommended pattern regarding a use of the electrical equipment on the basis of a process result by the statistical processing unit.

2. The apparatus according to claim 1, further comprising a recommended pattern presentation unit (124) configured to present the recommended pattern generated by the recommended pattern generation unit (123) to a user who uses the electrical equipment.

3. The apparatus according to claim 2, wherein the recommended pattern presentation unit (124) presents a plurality of recommended patterns, and
wherein the apparatus further includes a pattern reception unit (125) configured to receive a selection of a recommended pattern by the user.

4. The apparatus according to claim 3, wherein the pattern reception unit (125) further receives a revision of a recommended pattern by the user.

5. The apparatus according to claim 1, further comprising a recommended pattern execution unit (126) configured to control the electrical equipment on the basis of the recommended pattern generated by the recommended pattern generation unit (123).

6. The apparatus according to claim 5, wherein the recommended pattern execution unit (126) automatically performs control based on the recommended pattern generated by the recommended pattern generation unit (123) when the electrical equipment is turned on.

7. The apparatus according to claim 6, wherein the recommended pattern execution unit (126) continuously performs control based on a recommended pattern which is revised in response to a revision instruction when the revision instruction of the recommended pattern is received after the control based on the recommended pattern starts.

8. The apparatus according to any one of claims 1 to 7, further comprising a user information storage unit (131) that stores user identification information pieces for respectively identifying a plurality of users and one or more electrical equipment pieces used by respective users specified by the plurality of user identification information pieces in correlation with each other,
wherein the information reception unit (121) receives information regarding usages of the one or more electrical equipment pieces used by the plurality of users,
wherein the statistical processing unit (122) performs a statistical process on the usages of the one or more electrical equipment pieces used by the plurality of users, and
wherein the recommended pattern generation unit (123) generates a recommended pattern for each of the plurality of users.

9. The apparatus according to any one of claims 1 to 8, wherein at least one of the electrical equipment pieces is a lighting apparatus, and
wherein the recommended pattern generation unit (123) generates a pattern in which a dimming ratio and color temperature of light emitted by the lighting apparatus are set, as the recommended pattern.

10. An electrical equipment control system (1), comprising:
a plurality of electrical equipment pieces;
the electrical equipment control apparatus (10) according to any one of claims 1 to 9; and
a terminal apparatus (50) that transmits an instruction for controlling the one or more electrical equipment pieces.
